# EUROPEAN PATENT APPLICATION

(11) **EP 4 683 160 A1**
(43) Date of publication of application: **21.01.2026**
(21) Application number: 24849368.6
(22) Date of filing: 20.06.2024
(51) Int. Cl.: H02J 7/00, B60L 53/80, B60L 53/30, B60L 53/60

(54) **BATTERY EXCHANGE STATION**

(30) Priority: 31.07.2023 KR 20230099853
(71) Applicant: LG Energy Solution, Ltd., Seoul 07335 (KR)
(72) Inventor: RYU, Jeong Hun, Daejeon 34122 (KR)
(74) Representative: BCKIP Part mbB
(86) International application number: PCT/KR2024/008571
(87) International publication number: WO 2025/028797

(57) **Abstract**

The present disclosure relates to a battery swapping station, and more specifically, to a battery swapping station that identifies in advance the type of battery pack supplied to a battery slot, takes out a charging connector suitable for the type of battery pack, and connects it to the battery pack.

A battery swapping station according to the present disclosure includes a battery slot accommodating any one of n different battery packs (n is a natural number of 2 or more); n different charging connectors corresponding to each of the n battery packs; a sensing unit that identifies the type of battery pack being carried into the battery slot; and a connector coupling portion that takes out a charging connector suitable for the type of battery pack accommodated in the battery slot and connects it to the battery pack accommodated in the battery slot, thereby enabling to identify in advance the type of battery pack supplied to the battery slot, to take out the charging connector suitable for the type of battery pack, and to connect it to the battery pack.

## Description

### TECHNICAL FIELD

### CROSS-REFERENCE TO RELATED APPLICATIONS

The present application claims priority to Korean Patent Application No. 10-2023-0099853 filed on July 31, 2023 in the Republic of Korea, the disclosures of which are incorporated herein by reference.

### TECHNICAL FIELD

The present disclosure relates to a battery swapping station, and more specifically, to a battery swapping station that identifies in advance the type of battery pack supplied to a battery slot, takes out a charging connector suitable for the type of battery pack, and connects it to the battery pack.

### BACKGROUND ART

A rechargeable battery is a battery that can be charged and discharged, unlike a primary battery that cannot be recharged. A low-capacity rechargeable battery is used in small portable electronic devices such as mobile phones, laptop computers and camcorders, while a high-capacity battery is widely used as a power source for driving motors in hybrid vehicles.

The rechargeable battery may be used in the form of a battery cell, and the battery cell has a form in which a positive electrode, a separator and a negative electrode are sequentially stacked within an exterior material, and the inner space of the exterior material is filled with an electrolyte. A plurality of battery cells may be collected and electrically connected to form a battery module or a battery pack. Meanwhile, such a rechargeable battery may be charged by being inserted into a battery slot inside a battery swapping station in the form of a battery pack.

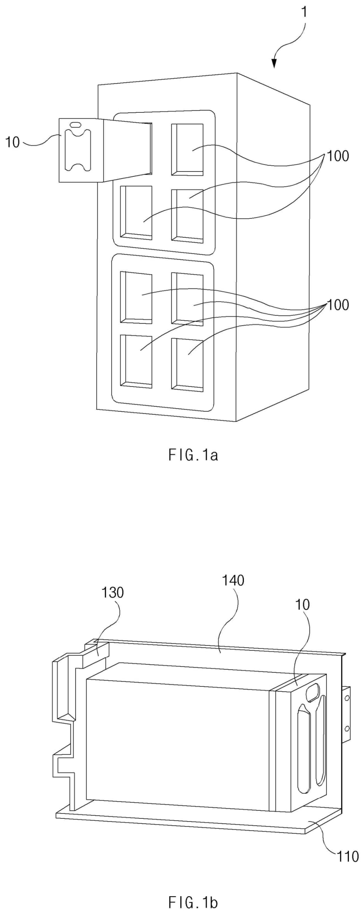

FIGS. 1a and 1b are perspective views showing a conventional battery swapping station and a conventional battery slot, respectively. A plurality of battery slots 100 are formed in the battery swapping station 1, and a charging connector for charging the inserted battery pack 10 may be provided in the battery swapping station 1.

The battery packs 10 have different types of charging connectors that are connected according to their types, but the conventional battery swapping station 1 was provided with only one type of charging connector. Therefore, the conventional battery swapping station 1 was designed to charge only one type of battery pack 10, which caused a problem of being unable to charge different types of battery packs 10 with one device.

### SUMMARY

### TECHNICAL PROBLEM

The present disclosure is designed to solve the problems of the related art, and therefore the present disclosure is directed to providing a battery swapping station that identifies in advance the type of battery pack supplied to a battery slot, takes out a charging connector suitable for the type of battery pack, and connects it to the battery pack.

### TECHNICAL SOLUTION

A battery swapping station according to the present disclosure includes a battery slot accommodating any one of n different battery packs (n is a natural number of 2 or more); n different charging connectors corresponding to each of the n battery packs; a sensing unit that identifies the type of battery pack being carried into the battery slot; and a connector coupling portion that takes out a charging connector suitable for the type of battery pack accommodated in the battery slot and connects it to the battery pack accommodated in the battery slot.

The battery slot may include a lower plate; a front plate and a rear plate installed on the front and rear sides of the lower plate, respectively; a first side plate and a second side plate installed on the right and left sides of the lower plate, respectively; and an upper plate installed at the upper end portion of the front plate and the rear plate.

A hinged door through which a battery pack being carried into or out of the battery slot passes may be formed on the front plate.

The sensing unit may include a wireless communication module installed on the hinged door and wirelessly communicating with a battery pack passing through the hinged door.

A connector insertion hole into which any one of the n charging connectors is inserted may be formed on the rear plate.

The connector coupling portion may include a rotary motor that rotates in one direction; n linear motors each coupled to the n charging connectors; and a connection member connecting the rotary motor and the n linear motors.

The connection member may include a frame portion fitted into a rotation shaft of the rotary motor; and n protrusions formed on the frame portion and arranged along the rotation direction of the rotary motor.

The n protrusions may be each coupled to the stators of the n linear motors, and the n charging connectors may be each coupled to the movers of the n linear motors.

The battery swapping station according to the present disclosure may further include a slot size adjustment portion that adjusts the size of the battery slot according to the type of battery pack accommodated in the battery slot.

The slot size adjustment portion may include a first slide that is coupled to the first side plate to move the first side plate in the left and right directions.

The slot size adjustment portion may include a second slide that is coupled to the second side plate to move the second side plate in the left and right directions.

The slot size adjustment portion may include a third slide that is coupled to the upper plate to move the upper plate in the upward and downward directions.

The battery swapping station according to the present disclosure may include a seating plate that is installed inside the battery slot and on which the battery pack carried into the battery slot is seated.

Additionally, the battery swapping station according to the present disclosure may further include a guide rail installed below the seating plate to guide the movement of the seating plate in the front and rear directions.

### ADVANTAGEOUS EFFECTS

A battery swapping station according to the present disclosure includes a battery slot accommodating any one of n different battery packs (n is a natural number of 2 or more); n different charging connectors corresponding to each of the n battery packs; a sensing unit that identifies the type of battery pack being carried into the battery slot; and a connector coupling portion that takes out a charging connector suitable for the type of battery pack accommodated in the battery slot and connects it to the battery pack accommodated in the battery slot, thereby having the advantageous effect that may identify in advance the type of battery pack supplied to the battery slot, take out the charging connector suitable for the type of battery pack, and connect it to the battery pack.

### BRIEF DESCRIPTION OF THE DRAWINGS

FIG. 1a is a perspective view showing a conventional battery swapping station.
FIG. 1b is a perspective view showing a conventional battery slot.
FIG. 2a is a perspective view showing an overall appearance of a battery slot of a battery swapping station according to Embodiment 1 of the present disclosure.
FIG. 2b is a perspective view showing the interior of a battery slot of a battery swapping station according to Embodiment 1 of the present disclosure.
FIG. 3 is a rear view showing a rear portion of the front plate of FIG. 2b.
FIG. 4a is a front view schematically showing a front portion of the rear plate of FIG. 2b.
FIG. 4b is a front view showing a state where a first connector is inserted into the rear plate of FIG. 4a.
FIG. 4c is a front view showing a state where a second connector is inserted into the rear plate of FIG. 4a.
FIG. 5a is a perspective view showing an overall appearance of a first battery pack accommodated in a battery swapping station according to Embodiment 1 of the present disclosure.
FIG. 5b is a view showing a connector coupling portion and an NFC tag formed in the first battery pack of FIG. 5a.
FIG. 5c is a perspective view showing an overall appearance of a second battery pack loaded into a battery swapping station according to Embodiment 1 of the present disclosure.
FIG. 5d is a view showing a connector coupling portion and an NFC tag formed in the second battery pack of FIG. 5c.
FIG. 6 is a cross-sectional view schematically showing a battery slot and a connector coupling portion of a battery swapping station according to Embodiment 1 of the present disclosure.
FIG. 7 is a perspective view showing the connector coupling portion of FIG. 6 in detail.
FIG. 8 is a view schematically showing a state where the size of a battery slot is adjusted in a battery swapping station according to Embodiment 2 of the present disclosure.

### DETAILED DESCRIPTION

Hereinafter, preferred embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, the battery swapping station according to the present disclosure will be described with reference to the drawings.

### Embodiment 1

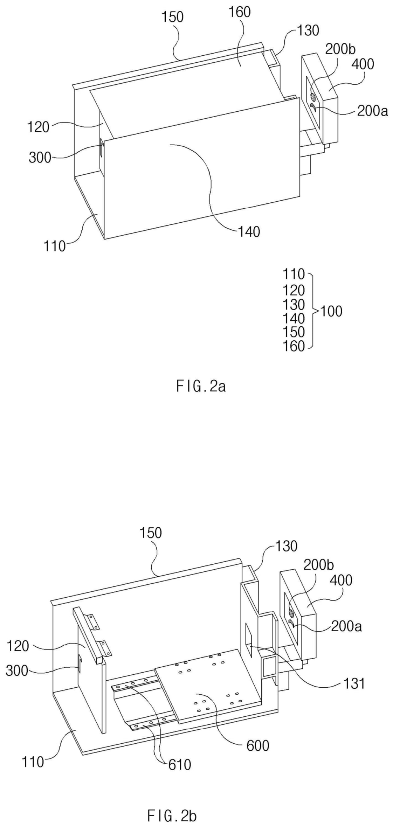

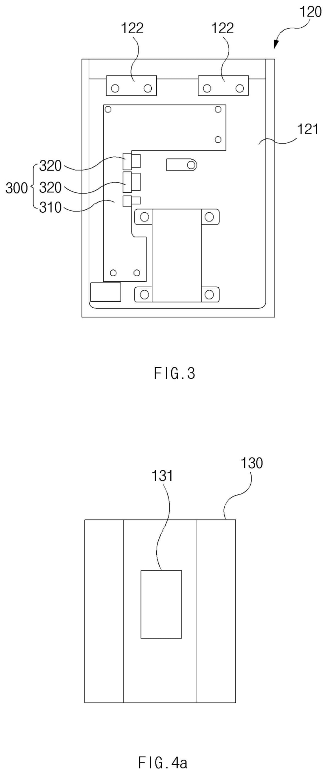

FIG. 2a is a perspective view showing an overall appearance of a battery slot of a battery swapping station according to Embodiment 1 of the present disclosure, and FIG. 2b is a perspective view showing the interior of a battery slot of a battery swapping station according to Embodiment 1 of the present disclosure. FIG. 3 is a rear view showing a rear portion of the front plate of FIG. 2b.

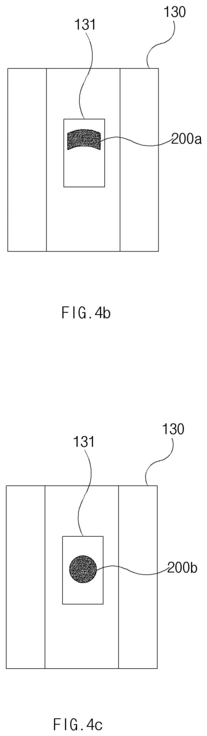

FIG. 4a is a front view schematically showing a front portion of the rear plate of FIG. 2b, FIG. 4b is a front view showing a state where a first connector is inserted into the rear plate of FIG. 4a, and FIG. 4c is a front view showing a state where a second connector is inserted into the rear plate of FIG. 4a.

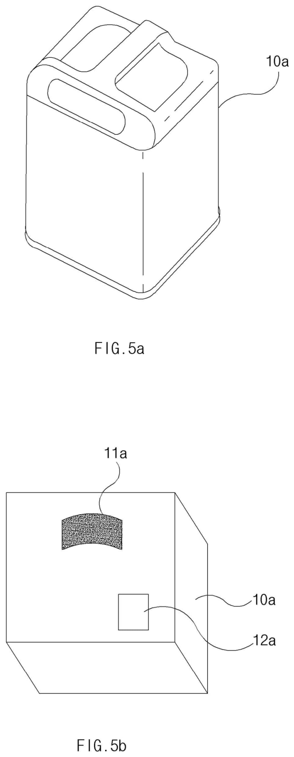

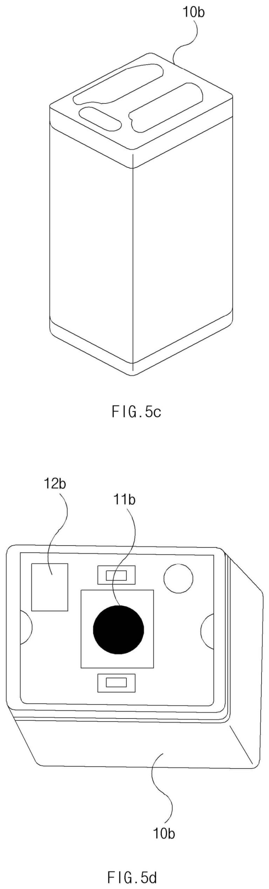

FIG. 5a is a perspective view showing an overall appearance of a first battery pack accommodated in a battery swapping station according to Embodiment 1 of the present disclosure, and FIG. 5b is a view showing a connector coupling portion and an NFC tag formed in the first battery pack of FIG. 5a. FIG. 5c is a perspective view showing an overall appearance of a second battery pack loaded into a battery swapping station according to Embodiment 1 of the present disclosure, and FIG. 5d is a view showing a connector coupling portion and an NFC tag formed in the second battery pack of FIG. 5c.

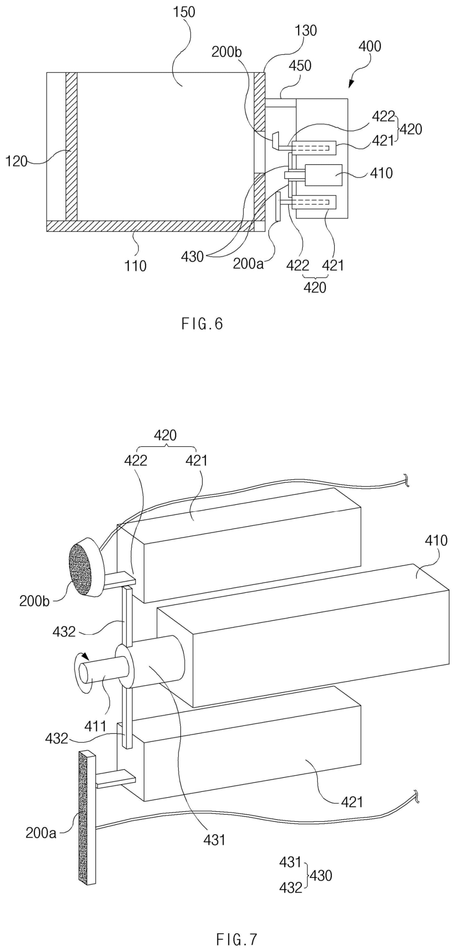

FIG. 6 is a cross-sectional view schematically showing a battery slot and a connector coupling portion of a battery swapping station according to Embodiment 1 of the present disclosure, and FIG. 7 is a perspective view showing the connector coupling portion of FIG. 6 in detail.

Referring to FIGS. 2a and 2b, the battery swapping station 1 according to Embodiment 1 of the present disclosure includes a battery slot 100 accommodating any one of n different battery packs 10 (n is a natural number of 2 or more), n different charging connectors 200 corresponding to each of the n battery packs 10, a sensing unit 300 that identifies the type of battery pack 10 being carried into the battery slot 100, and a connector coupling portion 400 that takes out a charging connector 200 suitable for the type of the battery pack 10 accommodated in the battery slot 100 and connects it to the battery pack 10 accommodated in the battery slot 100. The sensing unit 300 may identify in advance the type of battery pack 10 supplied to the battery slot 100, and the connector coupling portion 400 may take out the charging connector 200 suitable for the type of battery pack 10 identified by the sensing unit 300 and connect it to the battery pack 10, so that the battery swapping station 1 according to Embodiment 1 of the present disclosure has the advantageous effect of charging different types of battery packs 10 at once.

Here, the battery pack 10 is an electrically connected group of battery cells in the form of sequentially stacking a positive electrode, a separator and a negative electrode in an exterior material immersed with an electrolyte, and may have various structures and shapes depending on the type. For example, the battery pack 10 may have a shape in which a plurality of battery cells are accommodated inside a hexagonal case.

The battery slot 100 may be provided in plurality in the battery swapping station 1, and a space for accommodating and charging the battery pack 10 may be formed therein. Specifically, the battery slot 100 may include a lower plate 110, a front plate 120 and a rear plate 130 installed on the front and rear sides of the lower plate 110, respectively, a first side plate 140 and a second side plate 150 installed on the right and left sides of the lower plate 110, respectively, and an upper plate 160 installed at the upper end portion of the front plate 120 and the rear plate 130.

The lower plate 110 is a metal plate fixedly installed at a designated location inside the battery swapping station 1 and may have a flat shape in the horizontal direction. The front plate 120 and the rear plate 130 are metal plates coupled to the front and rear sides of the lower plate 110, respectively, and may have various shapes. The front plate 120 and the rear plate 130 may be coupled to the front plate 110 in various ways. For example, each of the front plate 120 and the rear plate 130 may be screwed or welded to the upper surface of the lower plate 110.

The upper plate 160 is a metal plate installed at the upper end portion of the front plate 120 and the rear plate 130, and may have a flat shape in the horizontal direction. The upper plate 160 may be screwed or welded to each of the front plate 120 and the rear plate 130 at a position lower than the upper end portion of the first side plate 140 and the second side plate 150.

The battery slot 100 in which the six plates are coupled as described above may form a receiving space within which the battery pack 10 is accommodated. A seating member 600 on which the battery pack 10 is seated may be formed at the lower end portion of the receiving space, and a support spring for supporting the seating member 600 in the upward and downward directions may be installed at the lower portion of the seating member 600. Additionally, a guide portion 610 for guiding the movement of the seating member 600 may be formed at the lower portion of the seating member 600.

A hinged door 121 through which the battery pack 10 being carried into or out of the battery slot 100 passes may be formed on the front plate 120. As shown in FIG. 3, the hinged door 121 may be hingedly coupled to hinged coupling portions 122 installed at the upper end portion of the front plate 120. In this case, the hinged door 121 may function as a passage through which the battery pack 10 is carried into or out of the battery slot 100.

Meanwhile, a sensing unit 300 for identifying the type of the battery pack 10 at the moment the battery pack 10 passes through the hinged door 121 may be installed on the hinged door 121, and the sensing unit 300 may include a wireless communication module 310 that wirelessly communicates with the battery pack 10 passing through the hinged door 121. Therefore, the wireless communication module 310 may identify the type of the battery pack 10 in advance before the battery pack 10 is accommodated inside the battery slot 100, so that the connector coupling portion 400 of the battery swapping station 1 may take out the charging connector 200 suitable for the type of the battery pack 10 in advance before the battery pack 10 is fully accommodated inside the battery slot 100.

Here, the wireless communication module 310 is a module that identifies the type of the battery pack 10 by wirelessly communicating with the NFC tag of the battery pack 10 at the moment it approaches, and may be installed in various areas within the hinged door 121. For example, the wireless communication module 310 may be installed on one surface or the other surface of the hinged door 121. Additionally, a module fixing member 320 for securing the wireless communication module 310 may be installed on the hinged door 121.

A connector insertion hole 131 into which any one of the n charging connectors 200 is inserted may be formed in the rear plate 130. As shown in FIG. 4a, the connector insertion hole 131 may be an opening formed in the center area of the rear plate 130 for the charging connector 200 to pass through. In this case, the connector insertion hole 131 may be formed large enough to allow various types of charging connectors 200 to pass through.

For example, as shown in FIGS. 4b and 4c, the connector insertion hole 131 may be formed large enough to allow not only a charging connector 200a of a shape corresponding to the first battery pack 10a, but also a charging connector 200b of a shape corresponding to the second battery pack 10b to pass through comfortably.

The charging connector 200 is connected to the connector coupling portion 11 of the battery pack 10 to electrically charge the battery pack 10, the battery pack 10 has a connector coupling portion 11 of different shapes depending on its type, and the charging connector 200 may also vary depending on the type of battery pack 10.

For example, in the case of the first battery pack 10a shown in FIGS. 5a and 5b, a connector coupling portion 11a may be formed on the lower plate of the battery pack. The first battery pack 10a may be connected to the charging connector 200a corresponding to the shape of the connector coupling portion 11a. Even in the case of the second battery pack 10b shown in FIGS. 5c and 5d, a connector coupling portion 11b may be formed on the lower plate of the battery pack. Likewise, the second battery pack 10b may be connected to the charging connector 200b corresponding to the shape of the connector coupling portion 11b.

As such, the shape of the charging connector 200 connected to each battery pack 10 may vary, and the connector insertion hole 131 may be formed large enough for various types of charging connectors 200a, 200b to pass through.

Meanwhile, an NFC tag 12 capable of communicating with the wireless communication module 310 formed at the hinged door 121 may be formed in the battery pack 10. The NFC tag 12 may be formed in various positions depending on the type of battery pack 10. For example, as shown in FIGS. 5b and 5d, the NFC tags 12a, 12b may be formed on the lower surface portion of the battery packs 10a, 10b.

On the other hand, the connector coupling portion 400, which takes out the charging connector 200 suitable for the type of battery pack 10 identified by the sensing unit 300 and connects it to the battery pack 10, may include a rotary motor 410 that rotates in one direction, n linear motors 420 each coupled to n charging connectors 200 (n is a natural number of 2 or more), and a connection member 430 connecting the rotary motor 410 and the n linear motors 420. In this case, there is an advantageous effect that a suitable charging connector 200 among the n charging connectors 200 may be automatically taken out and connected to the battery pack 10.

Here, the rotary motor 410, which rotates and moves the linear motor 420 clockwise or counterclockwise, may move the charging connector 200 connected to the linear motor 420 to a height corresponding to the connector insertion hole 131. The linear motor 420, which moves the connected charging connector 200 in the front and rear directions, may move the charging connector 200 located outside the connector insertion hole 131 into the connector insertion hole 131. In this case, the charging connector 200 moved into the connector insertion hole 131 may be connected to the connector coupling portion 11 of the battery pack 10 accommodated in the battery slot 100.

Additionally, the linear motor 420 may take out the charging connector 200 located inside the connector insertion hole 131 to the outside of the connector insertion hole 131. For example, when the battery pack 10 is fully charged, the linear motor 420 may retract the charging connector 200 and separate it from the connector coupling portion 11 of the battery pack 10.

Meanwhile, the connection member 430 may include a frame portion 431 fitted into a rotation shaft 411 of the rotary motor 410, and n protrusions 432 formed on the frame portion 431 (n is a natural number of 2 or more) and arranged along the rotation direction of the rotary motor 410. Here, the n protrusions 432 may be each coupled to the stators 421 of the n linear motors 420, and the n charging connectors 200 may be each coupled to the movers 422 of the n linear motors 420.

In this regard, FIGS. 6 and 7 show a structure in which the connection member 430 is coupled to the rotation shaft 411 of the rotary motor 410, two protrusions 431 are formed on the frame portion 431 of the connection member 430, and the linear motors 420 are coupled to each of the two protrusions 431. An opening into which the rotation shaft 411 may be fitted may be formed in the connection member 430.

The connection member 430 connecting the rotary motor 410 and the linear motor 420 may have various structures. For example, the frame portion 431 of the connection member 430 may be a cylindrical member with an opening in the center. The protrusion 432 extending in a direction perpendicular to the rotation direction of the rotation shaft 411 may be formed on the frame portion 431 of the connection member 430. In particular, the protrusion 432 may be installed in plurality along the rotation direction of the rotation shaft 411 on the outer circumferential surface of the frame portion 431.

The linear motor 420 may include a stator 421 that generates a magnetic field and a mover 422 which current flows through and moves in a linear direction by the magnetic field generated by the stator 421. Here, the stator 421 is a box-shaped member surrounding the rod-shaped mover 422 and may be coupled to the above-described protrusion 432. Various methods may be used for coupling the stator 421 and the protrusion 432. For example, the stator 421 and the protrusion 432 may be screwed together.

The mover 422 is a rod-shaped member that reciprocates in a linear motion, and may be connected to the charging terminal of the charging connector 200. Various methods may be used for coupling the mover 422 and the charging terminal. For example, the mover 422 and the charging terminal may be coupled by welding or bonded by an adhesive material.

The connector coupling portion 400 may prepare the charging connector 200 suitable for the type of battery pack 10 identified by the sensing unit 300. For example, when the type of battery pack 10 identified by the sensing unit 300 is the first battery pack 10a described above, the connector coupling portion 400 may prepare the charging connector 200a corresponding to the connector coupling portion 11a of the first battery pack 10a.

Here, the step of moving the charging connector 200a to a position corresponding to the position where the connector insertion hole 131 is formed is preferentially performed, which may be performed by the rotation of the rotary motor 410. Specifically, as the rotary motor 410 rotates, the linear motor 420 connected to the rotation shaft 411 of the rotary motor 410 may be rotationally moved in one direction. The rotation of the rotary motor 410 may be continued until the charging connector 200a connected to the linear motor 420 moves to a position corresponding to the position where the connector insertion hole 131 is formed.

Thereafter, the linear motor 420 connected to the charging connector 200a may move the mover 421 in a linear direction to move the charging connector 200a into the connector insertion hole 131. In this case, the first battery pack 10a is seated inside the battery slot 100, and the charging connector 200a may be connected to the connector coupling portion 11a of the first battery pack 10a.

On the other hand, when the second battery pack 10b is seated inside the battery slot 100, the connector coupling portion 400 may drive the rotary motor 410 and the linear motor 420 as described above to connect the charging connector 200b corresponding to the connector coupling portion 11b of the second battery pack 10b to the connector coupling portion 11b.

Meanwhile, the connector coupling portion 400 may further include a body frame 440 that accommodates the rotary motor 410, the linear motor 420 and the connection member 430. The body frame 440 may be a box-shaped member forming an internal space in which the rotary motor 410, the linear motor 420 and the connection member 430 are accommodated. In this case, the rotary motor 410, the linear motor 420 and the connection member 430 are accommodated inside the body frame 440, which has the advantageous effect of protecting the main driving unit of the present disclosure from external impact or the like.

On the other hand, the body frame 440 may be coupled to the rear plate 130 and installed in a fixed position. For example, the body frame 440 may be coupled to the rear plate 130 through a connection rod portion 450 extending from one surface of the rear plate 130.

### Embodiment 2

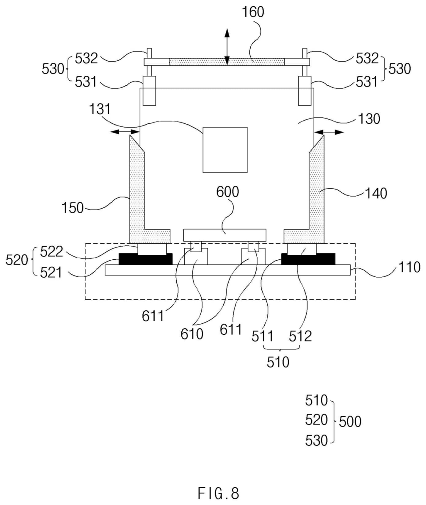

FIG. 8 is a view showing a state where the size of a battery slot is adjusted in a battery swapping station according to Embodiment 2 of the present disclosure.

Embodiment 2 of the present disclosure differs from Embodiment 1 in that a slot size adjustment portion 500 or a seating plate 600 for adjusting the size of the battery slot 100 is provided inside the battery swapping station 1. The contents in common with Embodiment 1 will be omitted as much as possible, and Embodiment 2 will be described focusing on the differences. That is, it is obvious that contents not described in Embodiment 2 may be regarded as the contents of Embodiment 1 if necessary.

Referring to FIG. 8, the battery swapping station 1 according to Embodiment 2 of the present disclosure may further include the slot size adjustment portion 500 that adjusts the size of the battery slot 100 according to the type of battery pack 10 accommodated in the battery slot 100. In this case, the size of the battery slot 100 may be adjusted to suit the type of battery pack 10 accommodated in the battery slot 100, so that the battery swapping station 1 according to Embodiment 2 of the present disclosure has the advantageous effect of being able to accommodate various types of battery packs 10 inside the device.

Additionally, the battery swapping station 1 according to Embodiment 2 of the present disclosure, as in Embodiment 1, has a connector coupling portion 400 that takes out a charging connector 200 suitable for the type of battery pack 10 accommodated inside the device and connects it to the battery pack 10, which has the advantageous effect of being able to proceed to charge each of the various types of battery packs 10 accommodated inside the device.

Meanwhile, the slot size adjustment portion 500 may include a first slide 510 that is coupled to the first side plate 140 to move the first side plate 140 in the left and right directions. The first slide 510 may include a first fixed unit 511 installed at a fixed position on the right side of the lower plate 110 and a first moving unit 512 installed above the first fixed unit. At this time, the first side plate 140 may be coupled to the first moving unit 512 on the upper side of the first moving unit 512, and in this case, it may move left and right according to the movement of the first moving unit 512 in the left and right directions.

Here, the first fixed unit 511 and the first moving unit 512 may have various structures and shapes. For example, the first moving unit 512 may be a moving unit that is coupled to a rod portion extending long in the left and right directions formed on the first fixed unit 511 and moves in the left and right directions along the rod portion.

Additionally, the slot size adjustment portion 500 may include a second slide 520 that is coupled to the second side plate 150 to move the second side plate 150 in the left and right directions. The second slide 520 may include a second fixed unit 521 installed at a fixed position on the left side of the lower plate 110 and a second moving unit 522 installed above the second fixed unit. At this time, the second side plate 150 may be coupled to the second moving unit 522 on the upper side of the second moving unit 522, and in this case, it may move left and right according to the movement of the second moving unit 522 in the left and right directions.

Here, the second fixed unit 521 and the second moving unit 522 may have various structures and shapes. For example, the second moving unit 522 may be a moving unit that is coupled to a rod portion extending long in the left and right directions formed on the second fixed unit 521 and moves in the left and right directions along the rod portion.

Additionally, the slot size adjustment portion 500 may include a third slide 530 that is coupled to the upper plate 160 to move the upper plate 160 in the upward and downward directions. The third slide is a linear motor that moves the upper plate 160 in the upward and downward directions, and may include a stator 531 fixedly installed at the upper area of the rear plate 130 and a mover 532 coupled to the upper plate 160.

Here, the stator 531 is a member that is installed at a fixed position of the rear plate 130 to generate a magnetic field, and the mover 532 may be a member that generates a current and reciprocates in a linear motion in the vertical direction by the magnetic field generated from the stator 531. The stator 531 may be coupled to the rear plate 130 in various ways. For example, an adhesive layer may be formed between the stator 531 and the rear plate 130. Additionally, the mover 532 may be coupled to the upper plate 160 in various ways. For example, the mover 532 and the upper plate 160 may be coupled by welding.

As the battery swapping station 1 according to Embodiment 2 of the present disclosure includes the slot size adjustment portion 500 that moves the first and second side plates 140, 150 in the left and right directions and the upper plate 160 in the upward and downward directions, the width and height of the battery slot 100 may be adjusted, and thus the size of the internal space may be adjusted to correspond to the size of the battery pack 10 loaded into the battery slot 100.

Meanwhile, a seating plate 600 on which the battery pack 10 carried into the battery slot 100 is seated may be installed inside the battery slot 100. The seating plate 600 is a flat plate on which the battery pack 10 is seated, and may be formed wide enough to allow various types of battery packs 10 to be seated.

Here, a guide rail 610 that guides the movement of the seating plate 600 in the front and rear directions may be installed below the seating plate 600, and a rail moving portion 611 that is coupled to a groove formed in the guide rail 610 and moves along the guide rail 610 may be formed below the seating plate 600. In this case, the seating plate 600 on which the battery pack 10 is seated may move in the front and rear directions through the guide rail 610 inside the battery slot 100, which has the advantageous effect of easily moving the battery pack 10 loaded from the front plate 120 side to the rear plate 130 side where the connector insertion hole 131 is formed.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [LIST OF REFERENCE NUMERALS]

| | | | |
|---|---|---|---|
| 1: | Battery swapping station | 10: | Battery pack |
| 11: | Connector coupling portion | 12: | NFC tag |
| 100: | Battery slot | 110: | Lower plate |
| 120: | Front plate | 121: | Hinged door |
| 122: | Hinged connection portion | 130: | Rear plate |
| 131: | Connector insertion hole | 140: | First side plate |
| 150: | Second side plate | 160: | Upper plate |
| 200: | Charging connector | 300: | Sensing unit |
| 310: | Wireless communication module | 320: | Module fixing member |
| 400: | Connector coupling portion | 410: | Rotary motor |
| 411: | Rotation shaft | 420: | Linear motor |
| 421: | Stator | 422: | Mover |
| 430: | Connection member | 431: | Frame portion |
| 432: | Protrusion | 440: | Body frame |
| 450: | Connection rod portion | 500: | Slot size adjustment portion |
| 510: | First slide | 511: | First fixed unit |
| 512: | First moving unit | 520: | Second slide |
| 521: | Second fixed unit | 522: | Second moving unit |
| 530: | Third slide | 531: | Stator |
| 532: | Mover | 600: | Seating plate |
| 610: | Guide rail | 611: | Rail moving portion |

## Claims

1. A battery swapping station comprising:
a battery slot accommodating any one of n different battery packs (n is a natural number of 2 or more);
n different charging connectors corresponding to each of the n battery packs;
a sensing unit that identifies a type of battery pack being carried into the battery slot; and
a connector coupling portion that takes out a charging connector suitable for the type of battery pack accommodated in the battery slot and connects it to the battery pack accommodated in the battery slot.

2. The battery swapping station according to claim 1,
wherein the battery slot comprises:
a lower plate;
a front plate and a rear plate installed on front and rear sides of the lower plate, respectively;
a first side plate and a second side plate installed on right and left sides of the lower plate, respectively; and
an upper plate installed at an upper end portion of the front plate and the rear plate.

3. The battery swapping station according to claim 2,
wherein a hinged door through which a battery pack being carried into or out of the battery slot passes is formed on the front plate.

4. The battery swapping station according to claim 3,
wherein the sensing unit comprises a wireless communication module installed on the hinged door and wirelessly communicating with a battery pack passing through the hinged door.

5. The battery swapping station according to claim 3,
wherein a connector insertion hole into which any one of the n charging connectors is inserted is formed on the rear plate.

6. The battery swapping station according to claim 5,
wherein the connector coupling portion comprises:
a rotary motor that rotates in one direction;
n linear motors each coupled to the n charging connectors; and
a connection member connecting the rotary motor and the n linear motors.

7. The battery swapping station according to claim 6,
wherein the connection member comprises:
a frame portion fitted into a rotation shaft of the rotary motor; and
n protrusions formed on the frame portion and arranged along the rotation direction of the rotary motor.

8. The battery swapping station according to claim 7,
wherein the n protrusions are each coupled to stators of the n linear motors, and
the n charging connectors are each coupled to movers of the n linear motors.

9. The battery swapping station according to claim 2, further comprising:
a slot size adjustment portion that adjusts a size of the battery slot according to the type of battery pack accommodated in the battery slot.

10. The battery swapping station according to claim 9,
wherein the slot size adjustment portion comprises a first slide that is coupled to the first side plate to move the first side plate in left and right directions.

11. The battery swapping station according to claim 9,
wherein the slot size adjustment portion comprises a second slide that is coupled to the second side plate to move the second side plate in left and right directions.

12. The battery swapping station according to claim 9,
wherein the slot size adjustment portion comprises a third slide that is coupled to the upper plate to move the upper plate in upward and downward directions.

13. The battery swapping station according to claim 1, comprising:
a seating plate that is installed inside the battery slot and on which the battery pack carried into the battery slot is seated.

14. The battery swapping station according to claim 13, further comprising:
a guide rail installed below the seating plate to guide the movement of the seating plate in front and rear directions.
